# EUROPÄISCHE PATENTSCHRIFT

(11) **EP 1 629 331 B1**
(45) Veröffentlichungstag und Bekanntmachung des Hinweises auf die Patenterteilung: **03.08.2011**
(21) Anmeldenummer: 04739541.3
(22) Anmeldetag: 02.06.2004
(51) Int. Cl.: G05B 19/418

(54) **VARIABLES FELDGERÄT FÜR DIE PROZESSAUTOMATISIERUNGSTECHNIK**
VARIABLE FIELD DEVICE FOR PROCESS AUTOMATION SYSTEM
APPAREIL DE TERRAIN VARIABLE DESTINE A LA TECHNIQUE D'AUTOMATISATION DE PROCESSUS

(30) Priorität: 03.06.2003 DE 10325277
(43) Veröffentlichungstag der Anmeldung: 01.03.2006
(73) Patentinhaber: Endress+Hauser Flowtec AG, 4153 Reinach (CH)
(72) Erfinder: ROTH, Jörg, 79540 Lörrach (DE)
(74) Vertreter: Andres, Angelika Maria
(86) Internationale Anmeldenummer: PCT/EP2004/005963
(87) Internationale Veröffentlichungsnummer: WO 2004/107069

(56) Entgegenhaltungen:
- DE-A- 10 154 534
- GB-A- 2 315 937
- US-A- 5 787 015
- US-A1- 2002 013 629

## Beschreibung

Die Erfindung betrifft ein variables Feldgerät für die Prozessautomatisierungstechnik gemäß dem Oberbegriff des Anspruchs 1.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte, pH-Redox-Messgeräte, Leitfähigkeitsmessgeräte etc., die als Messgeräte die entsprechenden Prozessvariablen Füllstand, Durchfluss, Druck, Temperatur, pH-Wert bzw. Leitfähigkeit erfassen. Eine Vielzahl derartiger Felgeräte wird von der Firma Endress + Hauser® hergestellt und vertrieben. Häufig sind Feldgeräte über einen Feldbus mit übergeordneten Einheiten z. B. Prozessleitsysteme bzw. Steuereinheiten verbunden. Diese übergeordneten Einheiten dienen zur Prozessvisualisierung, Prozessüberwachung, Prozesssteuerung sowie zur Bedienung der an den Feldbus angeschlossenen Feldgeräte.

Beispiele für derartige Feldbussysteme sind CAN®, CAN-OPEN, HART®, Profibus® PA, Profibus® DP, Profibus® FMS, Foundation® Fieldbus, etc..

Mit Hilfe dieser Feldbussysteme ist es nicht nur möglich, Messwerte von einem Sensor zu einer zentralen Steuereinheit zu übertragen, sondern auch Feldgeräte vom Prozessleitsystem aus "remote" zu bedienen. Hierfür sind spezielle Hardware- und Softwarekomponenten sowohl im Feldgerät wie auch Im Leitsystem notwendig

Aus der DE 101 54 534 A1 ist ein Prozesssteuerungsnetzwerk bekannt geworden, das aus einem oder mehreren Prozesscontrollern, die mit einer oder mehreren Host-Workstations oder -Computern und mit einer Gruppe von Eingabe/Ausgabe-Einrichtungen oder -Geräten verbunden sind. Jede dieser Einrichtungen ist mit einem oder mehreren Feldgeräten verbunden. Die Controller sind mit den Host-Computem über eine Kommunikationsverbindung verbunden. Die Controller kommunizieren mit den Feldgeräten über ein intelligentes Kommunikationsprotokoll.

Ein entsprechendes Prozesssteuerungsnetzwerk ist auch in der US2002/0013629 A1 beschrieben. Aus der US-PS 5,787,015 ist ein modular aufgebautes Analysesystem bekannt geworden, das aus einem Steuersystem und mehreren mit dem Steuersystem verbundenen Funktionsmodulen, wie I/O Modulen, Analysemodulen und einer Anzeigeeinheit, besteht.

Heutige Feldgeräte beinhalten immer mehr Funktionalitäten, die direkt oder indirekt von der eigentlichen Aufgabe des Feldgerätes, eine Prozessvariable zu messen, abgeleitet sind. Die Hersteller von Feldgeräten versuchen möglichst viele Funktionen in die Geräte hinein zu verlegen, um so "alle" d.h. auch spezielle Kundenwünsche erfüllen zu können.

Ein Hauptteil dieser Funktionalitäten wird von Mikroprozessoren im Feldgerät realisiert. Früher wurde fast die gesamte Rechenleistung dieser Mikroprozessoren für die eigentliche Messaufgabe benötigt.

Mit den heutigen Mikroprozessoren steht ausreichend Rechenleistung in den Feldgeräten zur Verfügung, um eine Vielzahl von Funktionalitäten zu realisieren. Anhand zweier Coriolis-Massedurchflussmessers der Firma Endress + Hauser® wird dies offensichtlich. Hatte ein m-Point® im Jahre 1989 noch 37 Bedienfelder, so hat ein Promass® 83 heute bereits 329 Bedienfelder, die vom Anwender beherrscht werden müssen.

Dieser Zuwachs an Funktionalität bedeutet einerseits auf der Seite der Gerätehersteller einen erhöhten Herstellungs- und Entwicklungsaufwand und auf der Seite der Anwender einen erhöhten Handhabungsaufwand. Beides ist mit erheblichen Kosten verbunden.

In diesem Zusammenhang sind u. a. die aufwendigen Handbücher und die Schulung der mit der Gerätebedienung beauftragten Personen zu nennen.

Der einzelne Anwender benötigt in der Regel nicht alle verfügbaren Funktionalitäten, sondern nur ganz bestimmte.

Auch ist dem Anwender nicht mehr klar ersichtlich, wie ein Messwert in einem derart komplexen Feldgerät weiterverarbeitet wird und welche Auswirkungen bestimmte Parameteränderungen auf diese Weiterverarbeitung haben. Wird bei einer Änderung der Einheiten z.B. von Liter auf Gallonen gleich der ursprüngliche Messwert umgesetzt oder nur für die Anzeige entsprechend umgewandelt. Welche Auswirkungen eine derartige Einheitenänderung auf vom ursprünglichen Messwert abgeleitete Größen hat, ist für den Anwender überhaupt nicht mehr transparent.

Aufgabe der Erfindung ist es deshalb, ein variables Feldgerät für die Prozessautomatisierungstechnik anzugeben, das nur die vom Anwender benötigten Funktionen aufweist, d.h. das anwendungsspezifisch anpassbar ist, das einfach und kostengünstig herstellbar, sowie einfach in der Handhabung ist und das für den Anwender transparent in der Weiterverarbeitung der Messwerte ist.

Gelöst wird diese Aufgabe durch das im Anspruch 1 angegebene variable Feldgerät bzw. durch das im Anspruch 14 angegebene Verfahren.

Vorteilhafte Weiterentwicklung der Erfindung sind in den entsprechenden Unteransprüchen angegeben.

Die wesentliche Idee der Erfindung besteht darin, dass die Funktionen eines Feldgerätes entsprechend verteilt werden. Das eigentliche Feldgerät stellt nur wenige Grundfunktionen (z. B. Messwerterzeugung) bereit. Anwendungsspezifische Funktionalitäten (z.B. Frequenz- /lmpulsausgänge) werden durch separate Funktionseinheiten, die vom Feldgerät räumlich getrennt sind, realisiert. Feldgeräte und Funktionseinheiten sind zum Datenaustausch an ein entsprechendes Kommunikationsmedium angeschlossen.

Dadurch ist das Feldgerät sehr variabel und anwendungsspezifisch anpassbar. Es weist keine unnötigen Funktionalitäten auf. Auch die Bedienung eines derartigen Feldgerätes ist äußerst einfach, da es nur die vom Anwender benötigten Funktionen aufweist. Weiterhin ist die Transparenz der Messwertweiterverarbeitung für den Anwender offensichtlich. Das Feldgerät liefert einen Messwert, der in den entsprechenden Funktionseinheiten weiterverarbeitet wird.

Durch den einfachen Aufbau ist das variable Feldgerät sehr kostengünstig in der Herstellung und Handhabung.

In einer Weiterentwicklung der Erfindung handelt es sich bei dem Kommunikationsmedium um eine Zweileiterversorgungsleitung über die die Feldgeräte und die Funktionseinheiten mit Strom und Spannung versorgt werden.

In einer Weiterentwicklung der Erfindung erlaubt das Kommunikationsmedium einen Mehrfachzugriff mit mehreren Datenkanälen. Somit können die Messwerte von verschiedenen Feldgeräten zeitgleich oder quasizeitgleich übertragen werden.

Der Mehrfachzugriff kann nach einem der bekannten Übertragungsverfahren z.B. FDMA (Frequency Division Multiple Access), TDMA (Time Division Multiple Access) oder CDMA (Code Division Multiple Access) erfolgen.

Die Übertragung der Daten auf dem Kommunikationsmedium erfolgt ohne Information über den Datensender bzw. Datenempfänger. Dadurch ist die Datenübertragung entsprechend einfach und schnell und es wird kein aufwendiges ommunikationsprotokoll verwendet.

Die Datenübertragungsrate auf dem Kommunikationsmedium sollte größer als 31,25 kBit/Sec. betragen, um Messwerte möglichst rasch weiter verarbeiten zu können.

Bei dem Kommunikationsmedium kann es sich z. B. um einen verdrillten Zweidrahtleiter handeln.

Gemäß einer Weiterentwicklung der Erfindung ist die Datenübertragungsrate für jeden Datenkanal anwendungsspezifisch anpassbar. Dadurch können Feldgeräte, die sich schnell ändernde Prozessvariablen erfassen, ihre Daten relativ rasch über das Kommunikationsmedium übertragen.

Gemäß einer Weiterentwicklung der Erfindung wird die Kanalkapazität eines Datenkanals fortlaufend überwacht und die Datenübertragungsrate dieses Kanals entsprechend angepasst. So wird der Einfluss von Störsignalen (z. B. Schaltimpulse) verringert.

In einer speziellen Ausgestaltung handelt es sich bei dem Feldgerät um einen Coriolis-Massedurchflussmessers, bei dem mehr als 100 Messungen pro Sekunde ausgeführt werden und die entsprechenden Messwerte über einen der Datenkanäle gesendet werden.

In einer Weiterentwicklung der Erfindung werden bei dem Coriolis-Massedurchflussmesser 3 Messwerte, Massedurchfluss, Dichte und Temperatur des im Durchfluss strömenden Mediums gemessen.

Zusätzlich werden die Messwerte mit einem Zeitstempel gesendet, um die genaue Zuordnung von Messung und Messzeitpunkt zu ermöglichen.

Die Messwerte werden in vorteilhafter Weise als Gleitkommawerte mit 32 Bits (IEEE-Format) übertragen.

Nachfolgend wir die Erfindung in einem Ausführungsbeispiels näher dargestellt.

Es zeigen:

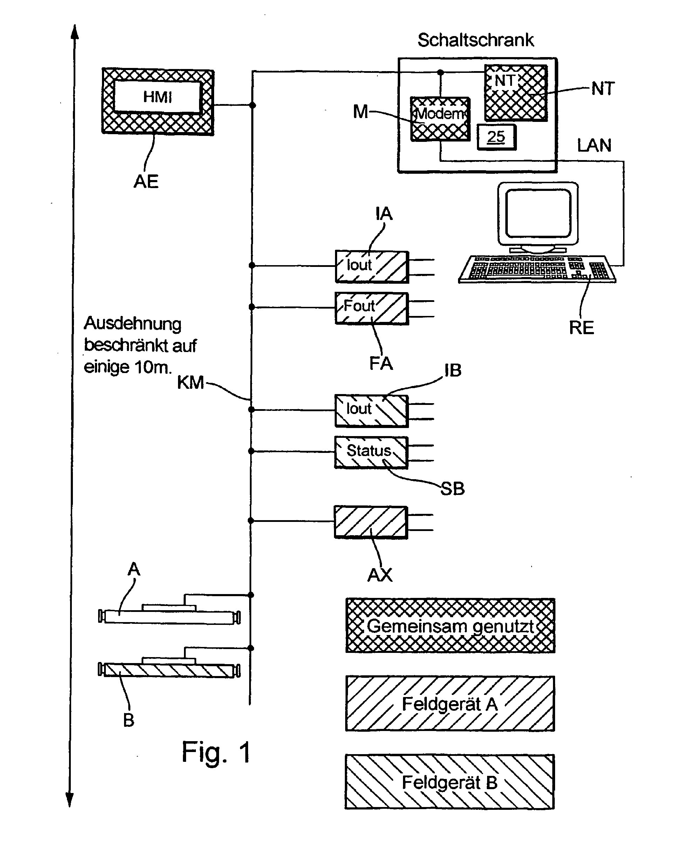

- Fig. 1: zwei variable Feldgeräte, die über ein Kommunikationsmedium mit verschiedenen Funktionseinheiten verbunden sind in schematischer Darstellung.

In Fig. 1 sind zwei Feldgeräte A, B schematisch dargestellt. Bei diesen Feldgeräten A, B handelt es sich jeweils um Coriolis-Massedurchflussmesser. Die beiden Feldgeräte A, B sind über ein Kommunikationsmediums KM mit mehreren Funktionseinheiten IA, FA, IB, SB und X verbunden. Weiterhin ist das Kommunikationsmedium KM, das ein herkömmlicher Zweidrahtleiter sein kann, an eine Anzeigeneinheit AE angeschlossen. Die Spannungsversorgung der Feldgeräte A,B, der Funktionseinheiten IA, FA, IB, SB und X sowie der Anzeigeeinheit AE erfolgt über ein Netzteil NT. Über ein Modem M ist das Kommunikationsmedium KM mit einem weiteren Netzwerk LAN (local area network) verbunden, an das beispielhaft eine Rechnereinheit RE angeschlossen ist. So können z.B. Messwerte der Feldgeräte zur Prozeßüberwachung oder Prozeßvisualisierung an die Rechnereinheit RE übertragen werden. Die Anzeigeeinheit AE dient zur Anzeige von Messwerten bzw. Statusinformation der beiden Feldgeräten A, B.

Bei der Funktionseinheit IA handelt es sich um einen Stromausgang. Bei der Funktionseinheit FA um einen Frequenzausgang. Derartige Strom- bzw. Frequenzausgänge sind von herkömmlichen Feldgeräten insbesondere Coriolis-Massedurchflussmessern bekannt.

Bei der mit AX gekennzeichneten Funktion handelt es sich um eine beliebige nicht näher definierte Funktionseinheit mit einem entsprechenden Ausgang. Bei der Funktionseinheit IB handelt es sich ebenfalls um einen Stromausgang und bei der Funktionseinheit SB handelt es sich um einen Statusausgang.

Nachfolgend ist die Funktion der Erfindung näher erläutert.

Die Funktionalität der Feldgeräte A bzw. B ist auf die Funktionseinheiten IA, FA bzw. IB, SB, die räumlich getrennt von den Feldgeräten angeordnet sind, verteilt.

Die beiden Feldgeräte A und B stellen nur Grundfunktionen wie z.B. Messwerterzeugung bereit. Bei einem Coriolis-Massedurchflussmesser sind dies Massedurchfluss, Dichte und Temperatur des durch den Durchflussmesser fließenden Mediums.

Alle anwendungsspezifischen Funktionalitäten werden in den zusätzlichen separaten Funktionseinheiten IA, FA, IB, SB. X realisiert.

Jedes Feldgerät A, B überträgt seine Daten (Messwerte) über das Kommunikationsmedium KM an die entsprechenden Funktionseinheit IA, FA, X bzw. IB, SB, wo die Daten weiterverarbeitet werden.

Benötigt ein Anwender drei Frequenzausgänge bei einem Feldgerät, so braucht er nur die entsprechenden Funktionseinheiten. Dadurch dass die Feldgeräte keine unnötigen Funktionalitäten aufweise, sind sie sehr kostengünstig und vom Anwender leicht zu bedienen.

Die nachfolgende Abschätzung ergibt den Nettobandbreitenbedarf eines an das Kommunikationsmedium KM angeschlossen Feldgeräts, wenn pro Messung 4 Messwerte (z.B. Massedurchfluss, Dichte, Temperatur und ein weiterer Messwert) ermittelt werden und diese mit einem Zeitstempel versehen werden und als Gleitkommawerte im 32 Bit (IEEE-Format) übertragen werden. 200/sec x (4 x 32 Bit + 32 Bit) = 32 000 Bit/sec.

Um auch Konfigurationsdaten austauschen zu können, wird die Nettobandbreite auf 50 000 Bit/sec. erhöht. Fügt man noch einen Overhead und eine Sicherheitsmarge dazu, so liegt der Bandbreitenbedarf eines Feldgerätes z.B. A bei ca. 100 kBit/sec.

Je nach dem was das Kommunikationsmedium KM an Übertragungsbandbreite erlaubt, können entsprechend viele Feldgeräte angeschlossen werden. Die Übertragungsbandbreite hängt u.a. von der Anzahl der angeschlossenen Komponenten, von der Länge der Leitung (Kommunikationsmedium) und von der Leitungsart (abgeschirmt bzw. nicht abgeschirmt) ab. Bei einer Bandbreite von 2 MBit können ca. 20 Teilnehmer (Feldgeräte) an das Kommunikationsmedium KM angeschlossen werden, und gleichzeitig Daten übertragen, ohne dass sie sich gegenseitig zu stören.

Derartige Datenübertragungsraten erlauben herkömmliche Komponenten der Kommunikationstechnik (Telekom bzw. Computernetzwerken), die in Massenproduktion gefertigt werden. Durch den Einsatz derartiger Komponenten sind die erfindungsgemäßen variablen Feldgeräte und die notwendigen Funktionseinheiten ebenfalls sehr kostengünstig herstellbar.

Bekannte Datenübertragungsverfahren sind z.B. FDMA (Frequency Division Multiple Access), TDMA (Time Division Multiple Access) oder CDMA (Code Division Multiple Access), die alle einen Mehrfachzugriff erlauben.

Da die Daten von den Feldgeräten A bzw. B auf verschiedenen Kanälen gesendet werden, ist keine Information über den Datensender bzw. Datensender notwendig (bei herkömmlichen Feldbussen müssen die Daten in ein entsprechendes Protokoll aufwendig verpackt werden).

Feldbussysteme erlauben teilweise nur eine Datenübertragungsrate von 32,25 kBit/sec. Hier sind jedoch erheblich höhere Datenübertragungsraten möglich.

Die Funktionseinheiten werden auf die Kanäle entsprechend abgestimmt. Die Abstimmung erfolgt bei der Konfiguration des gesamten Systems mit einer nicht näher beschriebenen Konfigurationseinheit. Wie bereits erwähnt ist das Konfigurieren des Systems für den Anwender, dadurch erheblich einfacher, da er nur benötigte Funktionseinheiten verwendet und der Datenfluss intuitiv transparent ist. Wird die Einheit eines Messwertes an einem Feldgerät geändert, so erhalten alle nachgeschalteten Einheiten wie z. B. die Funktionseinheiten, die geänderte Information.

Sind an das Kommunikationsmedium KM z. B. Temperatursensoren angeschlossen, die die Temperatur in einem großen Tankbehälter erfassen, wobei sich der Temperaturenwert sicher nur langsam ändert, so ist es nicht sinnvoll die Temperaturwerte mit einer Datenübertragungsrate von 200/sec. zu übertragen. Hier reicht ein erheblich geringere Datenübertragungsrate auf dem entsprechenden Datenkanal aus.

Weiterhin ist es möglich, die Kanalkapazität eines Datenkanals fortlaufend zu überwachen und so die Datenübertragungsrate entsprechend anzupassen. Dadurch kann der Einfluss von Störsignalen, wie sie beim Einschalten von Motoren entstehen können, verringert.

Mit der vorliegenden Erfindung lässt sich ein variables Feldgerät einfach und kostengünstig realisieren.

## Patentansprüche

1. Variables Feldgerät für die Prozessautomatisierungstechnik, das zur Datenübertragung an ein externes Kommunikationsmedium (KM) angeschlossen ist, wobei die Funktionalitäten des Feldgeräts anwendungsspezifisch anpassbar sind, **dadurch gekennzeichnet, dass** das variable Feldgerät aus einem eigentlichen Feldgerät (A, B), das an das Kommunikationsmedium (KM) angeschlossen ist, und aus separaten Funktionseinheiten (IA, FA, X bzw. IB. SB), die an das Kommunikationsmedium (KM) angeschlossen sind, besteht, wobei das eigentliche Feldgerät (A, B) nur Grundfunktionen wie z.B. Messwerterzeugung, bereitstellt und die anwendungsspezifischen Funktionalitäten, wie z.B. Frequenz-/Impulsausgänge, durch die separaten Funktionseinheiten (IA, FA, X bzw. IB. SB) realisiert sind, und wobei das eigentliche Feldgerät (A, B) und die separaten Funktionseinheiten (IA, FA, X bzw. IB. SB) Daten über einen eigenen Datenkanal austauschen.

2. Variables Feldgerät nach Anspruch 1, **dadurch gekennzeichnet, dass** das Kommunikationsmedium (KM) eine Zweileiterversorgungsleitung ist.

3. Variables Feldgerät nach Anspruch 1 oder 2, **dadurch gekennzeichnet, dass** auf dem Kommunikationsmedium (KM) mehreren Datenkanäle vorgesehen sind, auf die ein Mehrfachzugriff möglich ist.

4. Variables Feldgerät nach Anspruch 3, **dadurch gekennzeichnet, dass** der Mehrfachzugriff nach einem der Übertragungsverfahren FDMA, TDMA oder CDMA erfolgt.

5. Variables Feldgerät nach einem der vorhergehenden Ansprüche, **dadurch gekennzeichnet, dass** die Daten auf dem Kommunikationsmedium (KM) ohne Information über den Datensender und den Datenempfänger übertragbar sind.

6. Variables Feldgerät nach einem der vorhergehenden Ansprüche, **dadurch gekennzeichnet, dass** die Datenübertragungsrate auf dem Kommunikationsmedium (KM) größer als 31.25 kBit/Sec ist.

7. Variables Feldgerät nach einem der vorhergehenden Ansprüche, **dadurch gekennzeichnet, dass** das Kommunikationsmedium (KM) ein verdrillter Zweidrahtleiter ist.

8. Variables Feldgerät nach einem der vorhergehenden Ansprüche, **dadurch gekennzeichnet, dass** die Datenübertragungsrate für jeden Datenkanal anwendungsspezifisch anpassbar ist.

9. Variables Feldgerät nach einem der vorhergehenden Ansprüche, **dadurch gekennzeichnet, dass** die Kanalkapazität eines Datenkanals fortlaufend überwacht wird und Datenübertragungsrate dieses Datenkanals entsprechend angepassbar ist.

10. Variables Feldgerät nach einem der vorhergehenden Ansprüche, **dadurch gekennzeichnet, dass** das Feldgerät (A bzw. B) ein Coriolis-Massedurchflussmesser ist, bei dem mehr als 100 Messungen pro Sekunde durchgeführt werden und die entsprechenden Messwerte über einen der Datenkanäle gesendet werden.

11. Variables Feldgerät nach einem der vorhergehenden Ansprüche, **dadurch gekennzeichnet, dass** das Feldgerät (A, B) pro Messung mindesten drei Messwerte: Massedurchfluss, Dichte und Temperatur des im Durchflussmesser strömenden Mediums misst.

12. Variables Feldgerät nach einem der vorhergehenden Ansprüche, **dadurch gekennzeichnet, dass** zusätzlich zu den Messwerten ein Zeitstempel übertragbar ist.

13. Variables Feldgerät nach einem der vorhergehenden Ansprüche, **dadurch gekennzeichnet, dass** die Messwerte als Gleitkommawerte mit 32 Bits (IEEE-Format) übertragbar sind.

14. Verfahren zur Datenübertragung für Feldgeräte der Prozessautomatisierungstechnik, die an ein Kommunikationsmedium (KM) angeschlossen sind, **dadurch gekennzeichnet, dass** die Daten von den Feldgeräten (A, B) zu separaten Funktionseinheiten (IA, FA, X bzw. IB. SB), die den Feldgeräten (A, B) zugeordnet sind, unabhängig voneinander gesendet werden und dass die Daten zwischen dem eigentlichen Feldgerät (A; B) und den zugehörigen separaten Funktionseinheiten (IA, FA, X bzw. IB. SB) jeweils auf einem eigenen Datenkanal ausgetauscht werden,

## Claims

1. Variable field device for process automation technology, which is connected to an external communication medium (KM) for data transmission, where the functions of the field device can be adapted specifically to the application, **characterized in that** the variable field device comprises an actual field device (A, B) which is connected to the communication medium (KM), and separate function units (IA, FA, X or IB, SB) which are connected to the communication medium, where the actual field device (A, B) only provides basic functions, such as measured value generation, and where the application-specific functions, such as frequency/pulse outputs, are implemented by the separate function units (IA, FA, X or IB, SB), and where the actual field device (A, B) and the separate function units (IA, FA, X or IB, SB) exchange data via a dedicated data channel.

2. Variable field device as per Claim 1, **characterized in that** the communication medium (KM) is a two-wire supply cable.

3. Variable field device as per Claim 1 or 2, **characterized in that** several data channels are provided on the communication medium (KM) and multiple access to these channels is possible.

4. Variable field device as per Claim 3, **characterized in that** multiple access takes place using one of the transmission methods FDMA, TDMA, or CDMA.

5. Variable field device as per one of the previous claims, **characterized in that** the data on the communication medium (KM) can be transmitted without information about the data transmitter or recipient.

6. Variable field device as per one of the previous claims, **characterized in that** the data transmission rate on the communication medium (KM) is faster than 31.25 kBit/second.

7. Variable field device as per one of the previous claims, **characterized in that** the communication medium (KM) is a twisted two-wire cable.

8. Variable field device as per one of the previous claims, **characterized in that** the data transmission rate can be specifically adjusted for every data channel to suit the application.

9. Variable field device as per one of the previous claims, **characterized in that** the channel capacity of a data channel is constantly monitored and the data transmission rate of this data channel is adjusted accordingly.

10. Variable field device as per one of the previous claims, **characterized in that** the field device (A or B) is a Coriolis mass flowmeter, via which more than 100 measurements are performed per second and the corresponding measured values are transmitted via one of the data channels.

11. Variable field device as per one of the previous claims, **characterized in that** the field device (A, B) measures at least three measured values per measurement, namely the mass flow, the density and the temperature of the medium flowing in the flowmeter.

12. Variable field device as per one of the previous claims, **characterized in that** a timestamp can also be transmitted in addition to the measured values.

13. Variable field device as per one of the previous claims, **characterized in that** the measured values can be transmitted as floating-point values with 32 Bits (IEEE format).

14. Process for transmitting data for field devices used in process automation technology which are connected to a communication medium (KM), **characterized in that** the data from the field devices (A, B) are transmitted independently to separate function units (IA, FA, X or IB, SB), which are assigned to the field devices (A, B), and **in that** the data can be exchanged between the actual field device (A, B) and the associated separate function units (IA, FA, X or IB, SB) on a dedicated data channel.

## Revendications

1. Appareil de terrain variable destiné à la technique d'automatisation des process, lequel appareil est relié à un support de communication (KM) externe en vue de la transmission de données, les fonctionnalités de l'appareil de terrain pouvant être adaptées de façon spécifique à l'application, **caractérisé en ce que** l'appareil de terrain variable est composé d'un véritable appareil de terrain (A, B), lequel est raccordé au support de communication (KM), et d'unités fonctionnelles (IA, FA, X ou IB, SB) séparées, qui sont raccordées au support de communication (KM), le véritable appareil de terrain (A, B) ne mettant à disposition que des fonctions de base telles que la génération de valeurs mesurées, et les fonctionnalités spécifiques à l'application, telles que les sorties de fréquence / d'impulsion, étant réalisées par les unités fonctionnelles (IA, FA, X ou IB, SB) séparées, et le véritable appareil de terrain (A, B) et les unités fonctionnelles (IA, FA, X ou IB, SB) séparées échangeant des données par l'intermédiaire d'un canal de données dédié.

2. Appareil de terrain variable selon la revendication 1, **caractérisé en ce que** le support de communication (KM) est un câble d'alimentation bifilaire.

3. Appareil de terrain variable selon la revendication 1 ou 2, **caractérisé en ce que** sont prévus, sur le support de communication (KM), plusieurs canaux de données, auxquels un accès multiple est possible.

4. Appareil de terrain variable selon la revendication 3, **caractérisé en ce que** l'accès multiple a lieu d'après l'un des procédés de transmission FDMA, TDMA ou CDMA.

5. Appareil de terrain variable selon l'une des revendications précédentes, **caractérisé en ce que** les données sur le support de communication (KM) peuvent être transmises sans informations sur l'émetteur des données et le destinataire des données.

6. Appareil de terrain variable selon l'une des revendications précédentes, **caractérisé en ce que** la vitesse de transmission des données sur le support de communication (KM) est supérieure à 31,25 kbits/s.

7. Appareil de terrain variable selon l'une des revendications précédentes, **caractérisé en ce que** le support de communication (KM) est un câble bifilaire torsadé.

8. Appareil de terrain variable selon l'une des revendications précédentes, **caractérisé en ce que** la vitesse de transmission des données peut être adaptée de façon spécifique à l'application, pour chaque canal de données.

9. Appareil de terrain variable selon l'une des revendications précédentes, **caractérisé en ce que** la capacité d'un canal de données est surveillée en continu, et **en ce que** la vitesse de transmission des données de ce canal peut être adaptée en conséquence.

10. Appareil de terrain variable selon l'une des revendications précédentes, **caractérisé en ce que** l'appareil de terrain (A ou B) est un débitmètre Coriolis, pour lequel sont réalisées plus de 100 mesures par seconde et les valeurs mesurées correspondantes sont transmises par l'intermédiaire de canaux de données.

11. Appareil de terrain variable selon l'une des revendications précédentes, **caractérisé en ce que** l'appareil de terrain (A, B) mesure, à chaque instruction de mesure, au moins trois valeurs mesurées : débit massique, densité et température du fluide circulant dans le débitmètre.

12. Appareil de terrain variable selon l'une des revendications précédentes, **caractérisé en ce qu'**un horodateur peut être transmis en plus des valeurs mesurées.

13. Appareil de terrain variable selon l'une des revendications précédentes, **caractérisé en ce que** les valeurs mesurées peuvent être transmises sous la forme de valeurs à virgule flottante sur 32 bits (format IEEE).

14. Procédé destiné à la transmission de données pour les appareils de terrain de la technique d'automatisation des processus, lesquels sont raccordés à un support de communication (KM), **caractérisé en ce que** les données issues des appareils de terrain (A, B) sont envoyées indépendamment les unes des autres à des unités fonctionnelles (IA, FA, X ou IB, SB) séparées, qui sont affectées aux appareils de terrain (A, B), et **en ce que** les données entre le véritable appareil de terrain (A, B) et les unités fonctionnelles (IA, FA, X ou IB, SB) séparées correspondantes sont échangées respectivement sur un canal de données dédié.
